# EUROPEAN PATENT SPECIFICATION

(11) **EP 2 520 876 B1**
(45) Date of publication and mention of the grant of the patent: **03.04.2013**
(21) Application number: 11425124.2
(22) Date of filing: 04.05.2011
(51) Int. Cl.: F24J 2/04, H01L 31/042

(54) **Kit for installing a photovoltaic roofing**
Bausatz zur Herstellung eines photovoltaischen Daches
Kit pour monter un toit photovoltaïque

(43) Date of publication of application: 07.11.2012
(73) Proprietor: V-Energy S.r.l., 13900 Biella (BI) (IT)
(72) Inventor: Cionci, Fabrizio, 20031 Cesano Maderno (Monza Brianza) (IT)
(74) Representative: Vittorangeli, Lucia

(56) References cited:
- EP-A1- 0 424 581
- EP-A1- 1 341 240
- EP-A2- 0 905 795
- EP-A2- 2 354 718
- WO-A1-2011/023898
- DE-U1-202009 005 145
- FR-A1- 2 934 616
- JP-A- 11 222 991
- JP-A- 11 324 241
- JP-A- 2011 038 384
- JP-A- 2011 054 690
- US-A- 5 706 617

## Description

The present invention relates to a kit for installing a photovoltaic roofing.

In particular, the invention advantageously apply to manufacture and installation of solar photovoltaic systems in full replacement of, or to be integrated with the traditional coating surfaces.

In greater detail, the invention relates to the installation of the so-called "solar roofs", i.e. the installation of solar panels fully or partly constituting the covering or coating surface. In other works, by "solar roof" it is intended a roof in which the traditional covering surface made of tiles or fretted plate, is fully or partly replaced with solar panels.

It is known that for the installation of a photovoltaic system on a roof, the solar panels are laid in succession upon metal guides in turn secured to the existing covering surface.

The solar panels used consist of a plastic support to which the photovoltaic cells are fastened by a laminated glass sheet, the whole being framed by an aluminium support.

The solar panels thus disposed are maintained in place by use of metal jaws acting on said guides, in turn fastened by screws to the bearing structure of the roof, by securing the solar panels along the sides of the support frames. In other words, these locking section members act along sides parallel to a descending direction of the roof pitch and are exclusively used for fastening the modules to the covering without contemplating impermeability of the system.

In other words, coupling between a support frame and a locking section member as well as coupling of adjacent panels is unable to ensure water/rain-tightness. Consequently, the solar photovoltaic system thus obtained cannot be used as a protection of the underlying volume against exposure to the atmospheric agents, but it requires the unavoidable presence of a coating system placed under it.

In this context, the technical task underlying the present invention is to propose a kit for installing solar panels on a roof capable of overcoming the above mentioned drawbacks of the known art.

In particular, it is an aim of the present invention to make available a kit for installing solar panels on a roof enabling accomplishment of an integrated coating or roofing having an exhaustive water/rain-tightness feature, so as to combine the function of producing electric energy with the function of being waterproof/rainproof and insulating, which features are inherent in the concept of "roof".

The technical task mentioned and the aim specified are substantially achieved by a kit for installing a photovoltaic roofing including the technical features set out in one or more of the appended claims.

Further features and advantages of the present invention will become more apparent from the description given by way of non-limiting example of a kit and a method for installing a photovoltaic roofing , as shown in the accompanying drawings, in which:

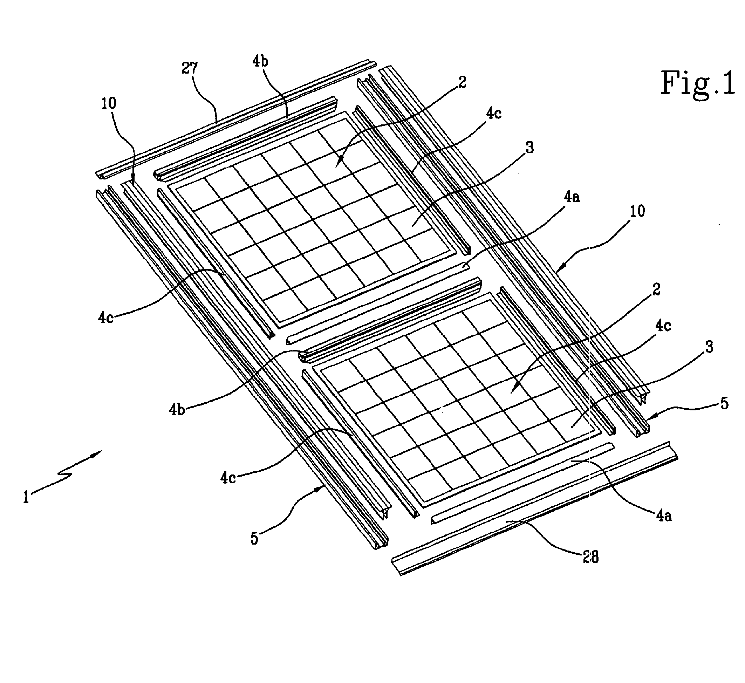

- Fig. 1 is a perspective view of a kit for installation of solar panels in accordance with the present invention;
- Figs. 2 and 3 are section views of respective components of the kit according to the present invention;
- Figs. 4a and 4b are section views of the components illustrated in Figs. 2 and 3 mutually coupled in two distinct operating conditions;
- Figs. 5, 6 and 7 are section views of further respective components of the kit in accordance with the present invention;
- Fig. 8 is a perspective view of a roof coated by means of a kit for installation of solar panels in accordance with the present invention;
- Fig. 8a is a perspective view of a detail seen in Fig. 8; and
- Fig. 9 is a section view of the roof shown in Fig. 8.

With reference to the accompanying drawings, a kit for installation of a photovoltaic roofing in accordance with the invention has been generally denoted at 1.

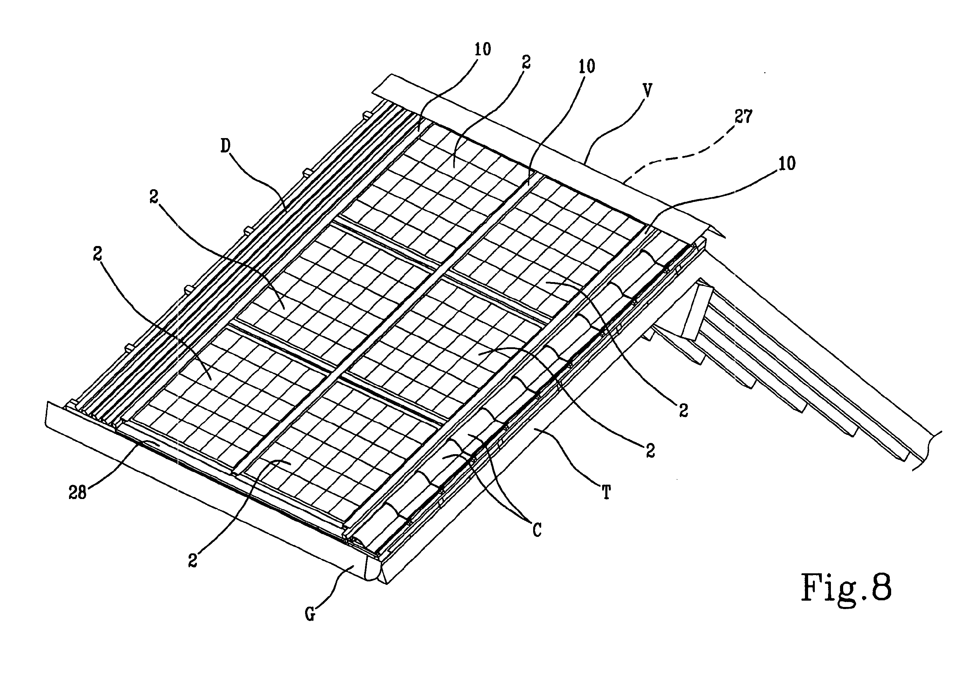

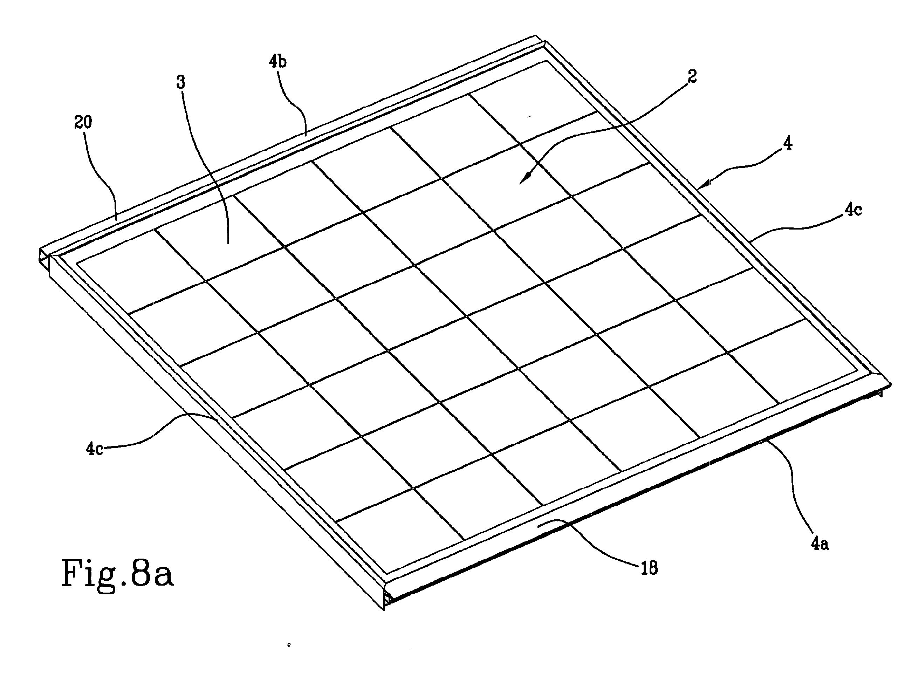

Kit 1 comprises at least one photovoltaic solar panel 2 comprising one or more modules 3 and provided with a support frame 4 peripherally disposed around modules 3 for supporting and stiffening the solar panel 2 itself (Fig. 8a).

These modules 3 can be, just by way of example, of the crystalline type (single-crystal silicon, polycrystalline silicon, etc.) or of the thin-film type (consisting of amorphous silicon, etc.) or still others. They have a substantially rectangular shape.

Preferably, kit 1 comprises a plurality of solar panels 2 identical with each other.

In a fitting-out configuration (i.e. in a configuration in which kit 1 is mounted on the roof), the solar panels 2 are arranged in one or more successions or arrays disposed along a sloping direction of a roof pitch and in side by side relationship with each other.

Each solar panel 2 further comprises electric connection terminals (not shown in the figures) required for series connection of the solar panels 2 themselves.

Kit 1 further comprises at least two support bars 5 extending along a major extension axis. Each support bar 5 comprises at least one fastening portion 5a designed to be fastened to a respective beam "T" of a bearing structure of a roof. In particular, the support bars 5 can be fastened to the sloping beams "T" of the roof defining the inclination of each roof pitch.

By way of example, each fastening portion 5a can be fastened to the respective beam "T" of the roof by screws or any other means necessary for ensuring steady fastening between the support bar 5 and the beam "T".

Each support bar 5 further comprises two rest portions 5b preferably of one piece construction with the fastening portion 5a and placed along opposite sides of the fastening portion 5a.

In the fitting-out configuration, a respective spacer element is disposed on each rest portion 5b. At least one of the mentioned spacer elements is defined by one of the sides of the support frame 4 of the solar panel 2. In other configurations, both spacer elements are defined by respective sides of the support frames 4 of distinct solar panels 2.

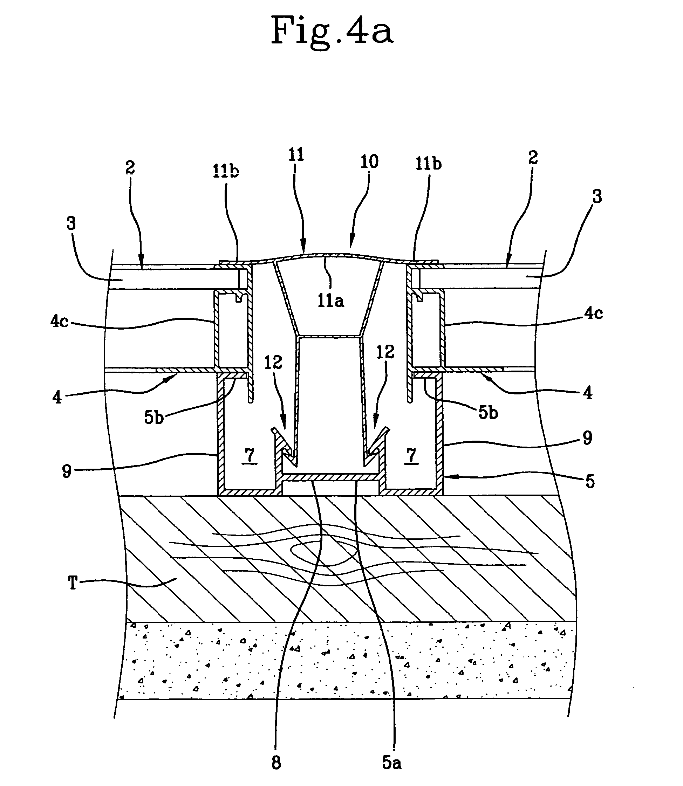

Advantageously, kit 1 comprises a plurality of support bars 5 identical with each other. In the fitting-out configuration, the support bars 5 are fastened, parallel to each other, to respective beams "T" of the roof. Resting on each support bar 5 are the support frames 4 of distinct solar panels 2 disposed in side by side relationship. In other words, each solar panel 2 will be arranged on, and supported by, the rest portions 5b of two distinct support bars 5 (Fig. 4a).

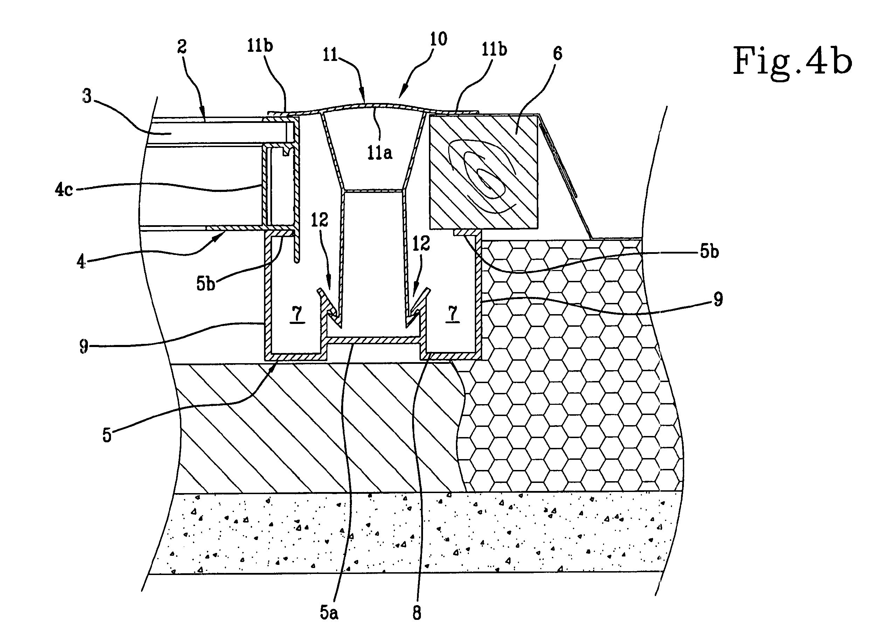

Alternatively, each support bar 5 carries a solar panel 2 resting on one of the rest portions 5b and one of the spacer elements on the other rest portion 5b (Fig. 4b).

It should be noted that, in this case, these support bars 5 are placed at the boundary between a succession or array of solar panels 2 and other types of roof coatings. In greater detail, the spacer element may comprise a lath 6 to which a different coating element of the roof can be connected such as, by way of example, an array of bent tiles "C" or a fretted plate "D" (Fig. 8).

At all events, the support bars 5 all have the same length included between 200 cm and 700 cm, preferably between 300 cm and 600 cm.

Should, during fitting-out of kit 1, the roof pitch have a lower length, the support bars 5 will be cut. In the opposite case, two or more support bars 5 will be aligned until the pitch length is reached. Preferably, the support bars 5 are made of metal. By way of example, the support bars 5 are made of aluminium.

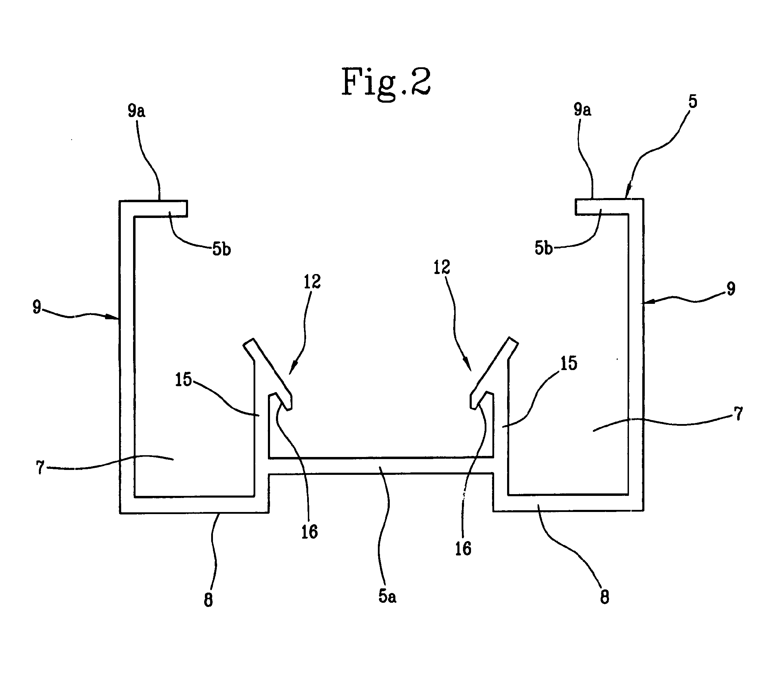

In addition, each support bar 5 has a hollow section in a direction transverse to the major extension direction, so as to define a drain 7. In greater detail, in accordance with Fig. 2, each support bar 5 comprises a bottom wall 8 that can be coupled with the respective beam "T" and two side walls 9 transversely emerging, preferably in an orthogonal direction, from the bottom wall 8. The side walls 9 are therefore parallel to each other.

The bottom wall 8 defines the fastening portion 5a of the support bar 5. In greater detail, the bottom wall 8 has two coplanar side portions that, in the fitting-out configuration, are in direct contact with the beam "T", and a middle portion placed between the side portions and parallel to the side portions but spaced apart therefrom. In accordance with the embodiment shown, the fastening portion 5a is defined by the middle portion of the bottom wall 8.

Each side wall 9 has a free edge 9a opposite to the bottom wall 8 and bent towards the other side wall 9. The bent free edges 9a are coplanar to each other for defining a rest surface. Therefore, the bent free edges 9a of the side walls 9 define the rest portions 5b of the support bars 5.

Drain 7 is therefore defined by the bottom wall 8 in cooperation with the side walls 9. In greater detail, drain 7 is defined between each side portion of the bottom wall 8 and the respective side walls 9 disposed in side by side relationship.

Kit 1 further comprises a plurality of locking bodies 10 each of which can be connected to a respective support bar 5. In detail, in the fitting-out configuration, since each locking body 10 is associated with the respective support bar 5, it lies between two successions of adjacent solar panels 2 and locks them in place.

Each locking body 10 has a substantially rectilinear shape and extends along a major extension direction. All locking bodies 10 have the same length included between 300 cm and 1200 cm, preferably between 400 cm and 600 cm. The locking bodies 10 are made of flexible plastic material. By way of example, the locking bodies 10 are made of polycarbonate.

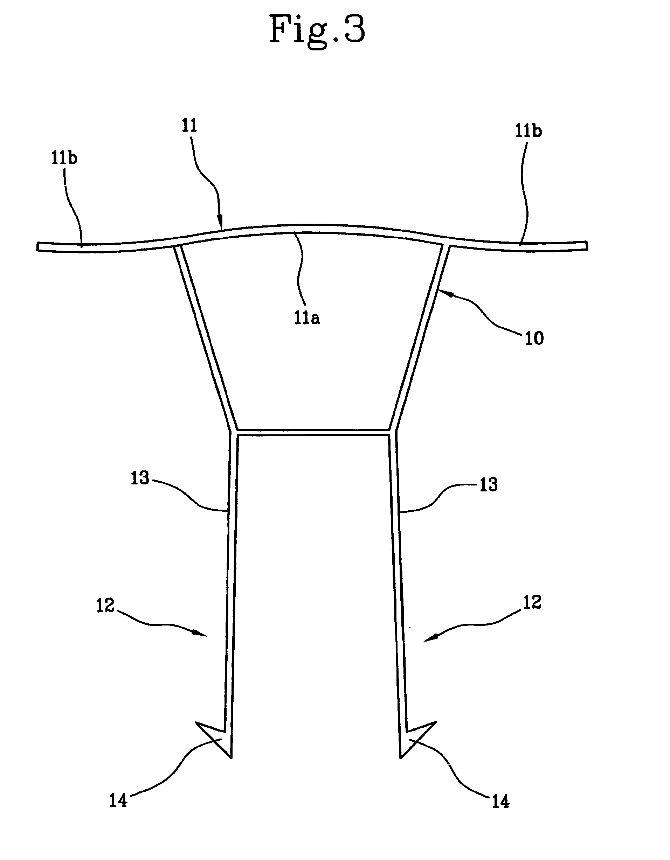

With reference to Fig. 3, the locking bodies 10 each comprise a respective coating element 11 that, in the fitting-out configuration, is placed in contact with the spacer elements. In other words, each coating element 11 is adapted to be disposed between two successions of solar panels 2 or, as above described, between a succession of solar panels 2 and lath 6.

In the embodiment shown, the coating element 11 extends transversely of the major extension direction by a length substantially equal to the length existing between the rest portions 5b of the support bars 5.

In greater detail, in a connection configuration between the locking bodies 10 and the respective support bars 5 (i.e. in the fitting-out configuration of kit 1), each coating element 11 is in contact with the spacer elements in a position opposite to the rest portions 5b. In this manner, the coating elements 11 of the locking bodies 10 push the support frames 4 of the solar panels 2 and/or lathes 6 against the respective rest portions 5b of the support bars 5 for keeping the solar panels 2 and/or lathes 6 in place.

Still with reference to Fig. 3, each coating element 11 has a section transverse to the major extension direction that comprises an arched middle portion 11a the concavity of which in the fitting-out configuration faces the support bar 5.

In addition, preferably, the transverse section has two arched side portions 11b placed along opposite sides of the arched middle portion 11a and having opposite concavity to that of the middle portion 11a.

The arched side potions 11b in the fitting-out configuration are in contact with the spacer elements to press them against the respective rest portions 5b.

The just described section shape of the coating elements 11 offers the necessary flexibility in such a manner that these coating elements 11 can exert the necessary force against the spacer elements.

Preferably, the section shape of each locking body 10 is symmetric to a central symmetry plane.

Note that in the fitting-out configuration the coating elements 11 exert such a pressure on the support frames 4 that water seepage between the coating elements 11 themselves and the solar panels 2 in limited. Should in any case seepage occur, since the support frames 4 resting on the rest portions 5b of the support bars 5 face drain 7, this seeped-in water would be conveyed into the drain itself for removal. In this connection, it is to be pointed out that drain 7 has an outflow section 7a that in the fitting-out configuration is designed to face a roof gutter "G".

To enable steady connection between each locking body 10 and the respective support bar 5, connecting members 12 are operatively disposed between the support bars 5 and locking bodies 10. These connecting members 12 are of the snap type.

In this regard, the connecting members 12 comprise at least one wing 13 connected to the coating element 11 of the locking body 10. Wing 13 is of one piece construction with the coating element 12 and is elastically flexible relative to the latter.

Advantageously, the connecting members 12 comprise two wings 13 disposed parallel to each other. Preferably, wings 13 are disposed in a mutually symmetric manner. Each wing 13 has a coupling tooth 14 placed at a respective free end of the wing 13 itself.

In addition, the connecting members 12 comprise at least one tailpiece 15 emerging from the bottom wall 8 of each support bar 5. In the embodiment described, the connecting members 12 comprise two tailpieces 15, disposed between the middle portion and the side portions of the bottom wall 8.

Formed on each tailpiece 15 is a cut or an undercut 16 designed to be engaged by the respective tooth 14 for carrying out coupling between the support bar 5 and locking body 10 in the connected configuration.

Since the section shape of tooth 14 is substantially triangular, tooth 14 enters the respective undercut 16 by pressure, said tooth 14 being however prevented from getting out of said undercut 16.

With reference to connection between solar panels 2 of the same succession, coupling means 17 is operatively disposed between the solar panels 2 so as to make this connection between them steady in a coupled configuration corresponding to the fitting-out configuration of kit 1.

In greater detail, the coupling means 17 is disposed between the support frames 4 of the solar panels 2. In still greater detail, the section shape of the support frames 4 defines said coupling means 17.

In this regard, each support frame 4 comprises a first side 4a and a second side 4b parallel and opposite to the first side 4a. In the fitting-out configuration, the first side 4a of each support frame 4 is placed downstream of the second side 4b with reference to the descending direction of the roof pitch.

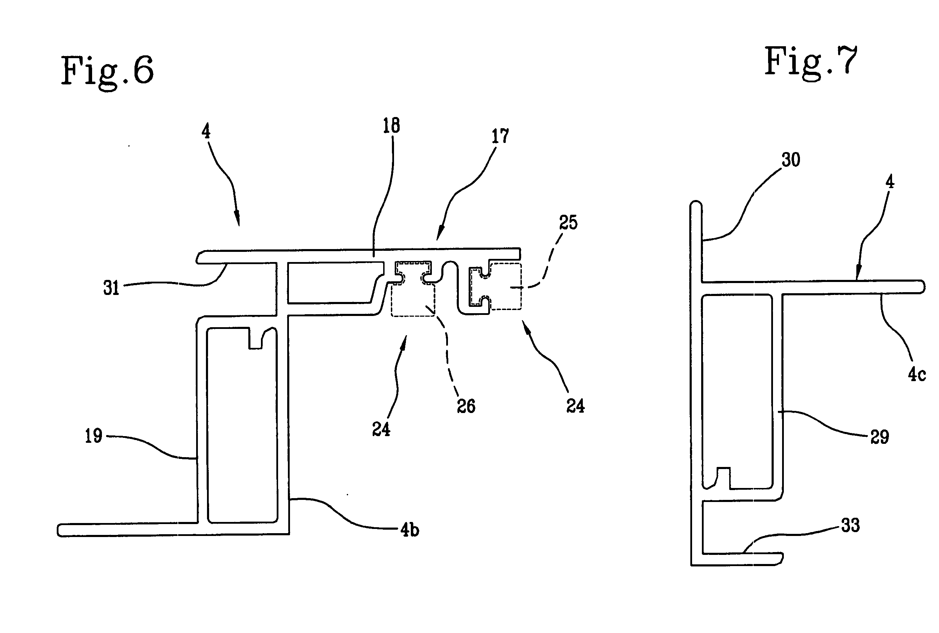

Referring particularly to Fig. 6, the support frame 4 comprises a tailpiece 18 extending along the first side 4a, preferably along the whole first side 4a.

This tailpiece 18 extends along a lying plane of the solar panel 2 away from the solar panel 2 itself. In addition, this first side 4a is defined by a main tubular portion giving stiffness to the support frame 4. As shown, tailpiece 18 is of one piece construction with the main tubular portion 19 and extends away therefrom.

A recess 31 is disposed between the tailpiece 18 and the main tubular portion 19 for receiving modules 3.

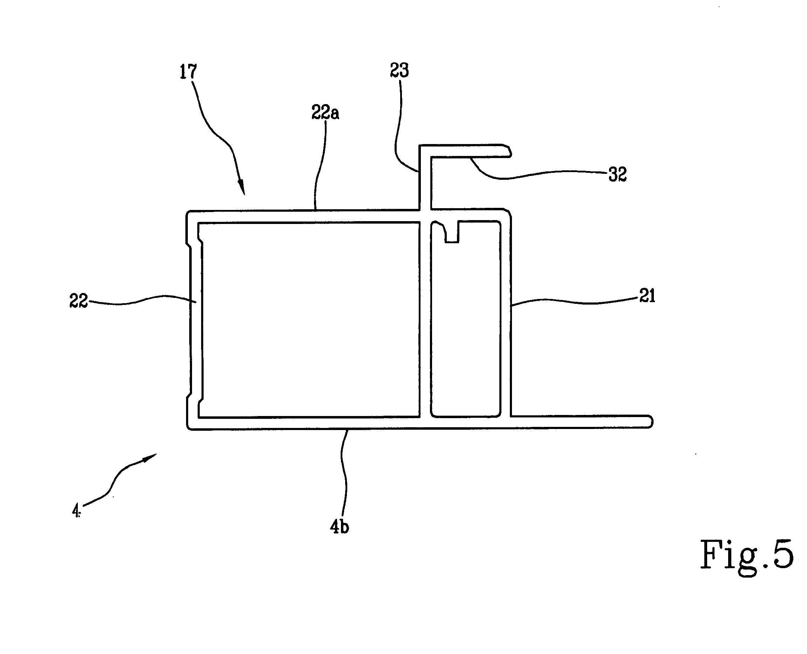

With reference to Fig. 5, a seat 20 is formed along the second side 4b of the support frame 4 for receiving and supporting the tailpiece 18 of the first side 4a of the adjacent solar panel 2 and in particular the upstream solar panel.

The second side 4b of each support frame 4 comprises a main tubular portion 21 giving the appropriate structural stiffness and an auxiliary tubular portion 22 fastened to or of one piece construction with the main tubular portion 21. In addition, a recess 32 unitary with the main tubular portion 21 is defined for housing modules 3.

The auxiliary tubular portion 22 externally defines a preferably flat rest surface 22a, and lying thereon is the tailpiece 18 of the first side 4a of the solar panel placed upstream in the coupled configuration. The rest surface 22a preferably extends along the whole second side 4b. For this reason, the rest surface 22a partly defines said seat 20.

In addition, an abutment shoulder 23 is fastened to or is of one piece construction with the main tubular portion 21 of the second side 4b of the support frame 4. Preferably, said abutment shoulder 23 is placed between the main tubular portion 21 and the auxiliary tubular portion 22. Preferably, the abutment shoulder 23 is defined by a flap extending transversely of the lying plane of the solar panel 2 and at least away from the auxiliary tubular portion 22. In other words, the abutment shoulder 23 substantially lies transversely of and preferably orthogonal to the rest surface 22a.

In the coupled configuration of adjacent solar panels 2, the abutment shoulder 23 defines a retainer for the tailpiece 18 of the first side 4a of the support frame 4 placed upstream. Consequently, the abutment shoulder 23 together with the rest surface 22a define said seat 20.

Kit 1 further comprise sealing means 24 operatively disposed between the tailpieces 18 and seats 20 in such a manner as to reduce and ultimately eliminate water seepage between the solar panels 2 coupled along the successions.

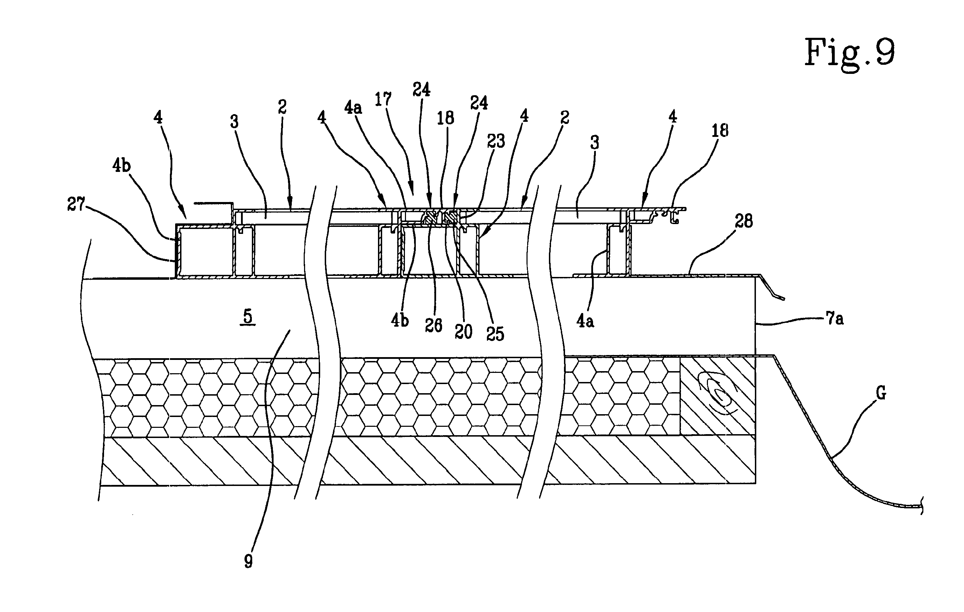

As shown in Figs. 6 and 9, the sealing means 24 comprises a seal 25 connected to each tailpiece 18. This seal 25 has an active surface disposed orthogonal to the extension of the tailpiece 18 itself. In other words, this seal 25 has an active surface disposed orthogonal to the lying plane of the solar panel 2. In this manner, in the coupled configuration, this active surface of seal 25 is in contact with the abutment shoulder 23. It is to be pointed out that the pressure exerted by this seal 25 on the abutment surface 23 and necessary for ensuring the hydraulic tightness, is guaranteed by the weight of the upstream solar panel 2 pushing the tailpiece 18 and seal 25 against the seat 20 of the downstream solar panel 2, being said solar panels 2 mounted on the inclined plane of the roof pitch.

The sealing means 24 further comprises an additional seal 26 connected to each tailpiece 18. This additional seal 26 has an active surface disposed parallel to the extension of the tailpiece 18 itself. In other words, this additional seal 26 has an active surface disposed parallel to the lying plane of the solar panel 2.

In this manner, in the coupled configuration, this active surface of the additional seal 26 is in contact with the rest surface 22a of the auxiliary tubular portion 22 of the second side 4b.

This additional seal 26 advantageously ensures creation of a further barrier to water seepage between adjacent solar panels 2, above all when the inclination of the roof pitch is not sufficient to powerfully press seal 25 against the abutment shoulder 23.

Each support frame 4 further has third and fourth sides 4c parallel to each other and meeting and joining the first 4a and second 4b sides. These third and fourth sides 4c lie on the rest portions 5b of the support bars 5 in the fitting-out configuration of kit 1.

As shown in Fig. 7, each third and fourth side 4c has a tubular portion 29 giving appropriate structural stiffness and a recess 33 for the coating plate D for housing modules 3.

In addition, the third and fourth sides 4c each further have a tab 30 extending orthogonal to the lying plane of the solar panel 2 away from recess 33. This tab 30 preferably extending along the whole of the third and fourth sides 4c, is disposed in the fitting-out configuration towards the bottom wall 8 of the support bars 5 for coming into contact with the bent free edges 9a of the side walls 9. In this manner, the solar panels are maintained in the correct position.

Kit 1 further comprises two retaining elements 27, 28 that can be positioned upstream of the first solar panel 2 of the succession and downstream of the last solar panel 2 of the succession.

Note that by the expression "first solar panel 2 of the succession" it is intended the solar panel 2 placed at a ridge "V" of the roof, and by "last solar panel 2 of the succession" it is intended the solar panel 2 placed close to gutter "G".

In particular, the retaining elements 27, 28 comprise at least one L-shaped portion, enabling them to be fastened to the roof beams on one side and brought into contact with the first 4a and the second 4b sides of the support frames 4, respectively.

In detail, in the fitting-out configuration of the kit, a first retaining element 27 is designed to be fastened to the roof at the roof ridge "V". This first retaining element 27 in this case is in contact with the second side 4b of the support frames 4 of the first solar panels 2 of the succession.

A second retaining element 28, in the fitting-out configuration of the kit, is designed to be fastened to the roof at gutter "G". This second retaining element 28 in this case is in contact with the first side 4a of the support frames 4 of the last solar panels 2 of the succession.

The retaining elements 27, 28 are preferably made of sheet metal.

A method of installing the solar panels 2 by use of the above described kit 1 is next described.

Once the solar panels 2, support bars 5 and locking bodies 10 have been provided, the support bars 5 are fastened to the roof beams "T".

In detail, the fastening portions 5a are secured to beams "T" by means of screws, for example.

Advantageously, the support bars 5 are fastened to the beams in such a manner that an end thereof defining the outflow section 7a of drain 7 faces gutter "G".

Then, the solar panels 2 are laid on the support bars 5. In detail, the support frames 4 are laid on the rest portions 5b. In greater detail, the third and fourth sides 4c of the support frames 4 are laid on the rest portions 5b.

Specifically, the step of laying down the solar panels 2 is done by fastening the second retaining element 28 close to gutter "G" and then laying the solar panel 2 upstream of the second retaining element 28. A subsequent solar panel 2 is disposed adjacent to, and in particular upstream of the just laid down panel and in such a manner that the tailpiece 18 of the upstream solar panel is frictionally fitted into the seat 20 of the downstream solar panel 2.

This operation is repeated until the first solar panel 2 of the succession lying at the roof ridge "V" is laid down.

At this point fastening of the first retaining element 27 at the roof ridge is carried out for locking the succession.

Once the step of laying the solar panels 2 has been completed, the locking bodies 10 are connected to the respective support bars 5 in such a manner that the coating elements 11 push the support frames 4 against the rest portions 5b to keep the solar panels 2 in position.

The invention reaches the intended purpose and achieves important advantages.

In fact, since by use of the kit according to the invention the solar panels are mounted between the support bars and the locking bodies, a barrier is defined against water seepage exactly between the support frames of the solar panels and the coating elements.

In addition, due to the presence of the drains, water seepage is further limited, as the water is drained towards the gutters and it is prevented from reaching the spaces under the roof.

## Claims

1. A kit for installing a photovoltaic roofing, comprising:
- a plurality of solar panels (2) suitable for being arranged in one or more successions or arrays disposed along a sloping direction of a roof pitch, each solar panel (2) having a peripherally- disposed support frame (4);
- at least two support bars (5), each extending along a major extension axis and each comprising a fastening portion (5a) adapted to be coupled with a roof beam along a sloping direction of a roof pitch and two rest portions (5b) connected to said fastening portion (5a) along opposite sides, each rest portion (5b) for receiving two spacer elements respectively, at least one of which defines a respective side of said support frame (4) of a solar panel (2); each support bar (5) being adapted to be disposed between two successions of solar panels (2) or between a succession of solar panels (2) and a lath (6),
wherein the kit comprises at least two locking bodies (10) made of flexible plastic material, each extending along a major extension axis, each of them suitable for connection to a respective support bar (5) and comprising a coating element (11);
wherein each support bar (5) and each locking body (10) has connecting members (12) of the snap type for connecting each locking body (10) to the respective support bar (5) ;
wherein each coating element (11) is configured to be disposed in contact with respective spacer elements at a position opposite to said rest portions (5b) in a connected configuration of each locking body (10) with the respective support bar (5), each coating element (11) being adapted to be disposed between two successions of solar panels (2) or between a succession of solar panels (2) and a lath (6), and being configured to push said spacer elements against the respective rest portions (5b) for maintaining said solar panels (2) or lath (6) in position,
wherein each support bar (5) comprises at least one bottom wall (8) to be coupled with the beam and at least partly defining said fastening portion (5a), and two side walls (9) emerging from said bottom wall (8); wherein each side wall (9) of each support bar (5) has a free edge (9a) opposite to the bottom wall (8) and bent towards the other side wall (9), the bent free edges (9a) being coplanar to each other for defining a rest surface of rest portions (5b),
wherein each support bar (5) has a substantially hollow cross-section for defining a water drain (7) defined by the bottom wall (8) in cooperation with the side walls (9),
wherein the spacer elements resting in the fitting-out configuration on the rest portions (5b) of the support bars (5) face the drain (7), whereby the seeped-in water is conveyed into the drain itself for removal,
wherein the spacer elements of the solar panel (2) further have a tab (30) extending orthogonal to the lying plane of the solar panel (2) along the major extension axis and disposed in the fitting-cut configuration towards the bottom wall (8) of the support bars (5)
for coming into contact with the bent free edges (9a) of the side walls (9)
wherein the kit further comprises
coupling means (17) disposed between adjacent solar panels (2) of a succession in such a manner as to connect a solar panel (2) with an adjacent solar panel (2) in a coupled configuration comprising a tailpiece (18) placed along at least one first side (4a) of said support frame (4) and extending along a lying plane of said solar panel (2) away from said solar panel (2), and a seat (20) disposed along at least one second side (4b), opposite to the first side, for receiving said tailpiece (18) of an adjacent solar panel (2) resting thereon, said seat (20) being defined by an abutment shoulder (23) together with a rest surface (22a) of the second side (4b),
the abutment shoulder (23) defining a retainer for the tailpiece (18) of the first side (4a) of the support frame (4) placed upstream with reference to the descending direction of the roof pitch
and wherein sealing means (24) operatively disposed between said tailpiece (18) of a solar panel (2) and said seat (20) of an adjacent solar panel (2) comprises a seal (25) connected to the tailpiece (18) having an active surface disposed orthogonal to the lying plane of the solar panel (2) and configured to be in contact with the abutment shoulder (23) in the coupled configuration,
wherein said sealing means (24) further comprises an additional seal (26) connected to the tailpiece (18) having an active surface disposed parallel to the lying plane of the solar panel (2) and configured to be in contact with the rest surface (22a) of the second side (4b) in the coupled configuration
wherein the tailpiece (18) and the seal (25) are arranged to be pushed against the seat (20) of the downstream panel (2) with reference to the descending direction of the roof pitch.

2. A kit as claimed in claim 1, **characterised in that** each coating element (11) has a transverse section comprising at least one arched middle portion (11a) the concavity of which faces said support bar (5); said transverse section further comprising arched side portions (11b) the concavity of which is opposite to that of said arched middle portion (11a) and disposed along sides opposite to said arched middle portion (11a); said arched side portions (11b) being in contact with said spacer elements in said connected configuration.

3. A kit as claimed in claim 1, **characterised in that** said connecting members (12) comprise at least one wing (13) elastically connected to said coating element (11) and having a tooth (14) at a free end thereof; said connecting members (12) further comprising a tailpiece (15) emerging from said bottom wall (8) and having an undercut (16) to be engaged by said tooth (14) in the connected configuration.

4. A kit as claimed in claim 1, **characterised in that** said first side (4a) of said support frame (4) comprises a main tubular portion (19); said tailpiece (18) being of one piece construction with said tubular portion (19) and extending away therefrom.

5. A kit as claimed in claim 1 or 4, **characterised in that** said second side (4b) of said support frame (4) comprises a main tubular portion (21) and the abutment shoulder (23) substantially extending transversely of said lying plane.

6. A kit as claimed in claim 4 or in claim 5, **characterised in that** it further comprises two retaining elements (27, 28) associable with said first side of said support frame (4) of a first solar panel (2) in said succession and to said second side (4b) of said support frame (4) of a last solar panel (2) in said succession.

## Patentansprüche

1. Bausatz zur Herstellung eines photovoltaischen Dachs, umfassend:
- eine Vielzahl von Solarpaneelen (2), die ausgelegt sind, um in einer oder mehreren Abfolgen oder Bereichen entlang einer abschüssigen Richtung einer Dachschräge angeordnet zu werden, wobei jedes Solarpaneel (2) einen peripher angeordneten Halterungsrahmen (4) aufweist;
- mindestens zwei Haltestäbe (5), von denen jeder sich entlang einer Hauptausdehnungsachse erstreckt und einen Befestigungsabschnitt (5a) umfasst, ausgelegt, um mit einem Dachträger entlang einer abschüssigen Richtung einer Dachschräge gekuppelt zu werden, sowie zwei Auflageabschnitte (5b), verbunden mit dem Befestigungsabschnitt (5a) entlang gegenständig angeordneter Seiten jedes Auflageabschnitts (5b), um jeweils zwei Abstandselemente aufzunehmen, von denen mindestens eins eine jeweilige Seite des Halterungsrahmens (4) eines Solarpaneels (2) definiert; wobei jeder Haltestab (5) ausgelegt ist, um zwischen zwei Abfolgen von Solarpaneelen (2) oder zwischen einer Abfolge von Solarpaneelen (2) und einer Dachlatte (6) angeordnet zu werden,
wobei der Bausatz mindestens zwei Verriegelungskörper (10), bestehend aus flexiblem Kunststoffmaterial umfasst, von denen sich jeder entlang einer Hauptausdehnungsachse erstreckt und sich für die Verbindung mit einem jeweiligen Haltestab (5) eignet und umfassend ein Beschichtungselement (11);
wobei jeder Haltestab (5) und jeder Verriegelungskörper (10) Verbindungsglieder (12) vom Schnapptyp besitzt, um jeden Verriegelungskörper (10) mit dem jeweiligen Haltestab (5) zu verbinden;
wobei jedes Beschichtungselement (11) konfiguriert ist, um in Kontakt mit den jeweiligen Abstandselementen an einer Position angeordnet zu werden, die den Auflageabschnitten (5b) gegenüberliegt, in einer verbundenen Konfiguration jedes Verriegelungskörpers (10) mit dem jeweiligen Haltestab (5), wobei jedes Beschichtungselement (11) ausgelegt ist, um zwischen zwei Abfolgen von Solarpaneelen (2) oder zwischen einer Abfolge von Solarpaneelen (2) und einer Dachlatte (6) angeordnet zu werden und so konfiguriert ist, dass die Abstandselemente gegen die jeweiligen Auflageabschnitte (5b) gedrückt werden, um dafür zu sorgen, dass die Position der Solarpaneele (2) oder der Dachlatte (6) beibehalten wird,
wobei jeder Haltestab (5) mindestens eine Bodenwand (8) umfasst, die mit dem Träger zu kuppeln ist, und mindestens teilweise den Befestigungsabschnitt (5a) definiert, und zwei Seitenwände (9), die aus der Bodenwand (8) heraustreten;
wobei jede Seitenwand (9) jedes Haltestabs (5) eine freie Kante (9a) aufweist, die gegenständig zur Bodenwand (8) angeordnet und zur anderen Seitenwand (9) hinführend gebogen ist, wobei die gebogenen freien Kanten (9a) jeweils auf derselben Ebene liegen, um eine Auflagefläche der Auflageabschnitte (5b) zu definieren, wobei jeder Haltestab (5) einen im Wesentlichen hohlen Querschnitt aufweist, um einen Wasserabfluss (7) zu definieren, der von der Bodenwand (8) in Zusammenwirkung mit den Seitenwänden (9) definiert wird,
wobei die Abstandselemente, die in der Auslegungskonfiguration auf den Auflageabschnitten (5b) der Haltestäbe (5) aufliegen, dem Abfluss (7) gegenüberliegend angeordnet sind, während das einsickernde Wasser in den Abfluss zur Beseitigung eingeleitet wird,
wobei die Abstandselemente des Solarpaneels (2) zudem eine Lasche (30) aufweisen, die sich rechtwinklig zur liegenden Ebene des Solarpaneels (2) entlang der Hauptausdehnungsachse erstreckt und in der Auslegungskonfiguration zur Bodenwand (8) der Haltestäbe (5) angeordnet ist, um mit den gebogenen freien Kanten (9a) der Seitenwände (9) in Kontakt zu kommen,
wobei der Bausatz zudem umfasst
Kupplungsmittel (17), angeordnet zwischen angrenzenden Solarpaneelen (2) einer Abfolge, sodass ein Solarpaneel (2) mit einem angrenzenden Solarpaneel (2) in einer gekuppelten Konfiguration verbunden wird, umfassend ein Endstück (18), das entlang mindestens einer ersten Seite (4a) des Halterungsrahmens (4) platziert ist und sich entlang einer liegenden Ebene des Solarpaneels (2) wegführend vom Solarpaneel (2) erstreckt, und einen Sitz (20), angeordnet entlang mindestens einer zweiten Seite (4b), gegenständig zur ersten Seite angeordnet, um das Endstück (18) eines angrenzenden Solarpaneels (2) aufzunehmen und darauf aufzuliegen, wobei der Sitz (20) durch eine Anschlagschulter (23) zusammen mit einer Auflagefläche (22a) der zweiten Seite (4b) definiert ist
und die Anschlagschulter (23) eine Halterung für das Endstück (18) der ersten Seite (4a) des Halterungsrahmens (4), platziert stromaufwärts zur abwärts führenden Richtung des Dachträgers, definiert
und wobei Abdichtungsmittel (24) betriebswirksam zwischen dem Endstück (18) eines Solarpaneels (2) und dem Sitz (20) eines angrenzenden Solarpaneels (2) angeordnet sind und eine Dichtung (25) umfassen, die mit dem Endstück (18) verbunden ist, aufweisend eine aktive Oberfläche, angeordnet rechtwinklig zur liegenden Ebene des Solarpaneels (2) und konfiguriert, um in Kontakt mit der Anschlagschulter (23) in der gekuppelten Konfiguration zu sein,
wobei die Abdichtungsmittel (24) zudem eine zusätzliche Dichtung (26) umfassen, die mit dem Endstück (18) verbunden ist, aufweisend eine aktive Oberfläche, die parallel zur liegenden Ebene des Solarpaneels (2) angeordnet und konfiguriert ist, um in Kontakt mit der Auflagefläche (22a) der zweiten Seite (4b) in der gekuppelten Konfiguration zu sein und
wobei das Endstück (18) und die Dichtung (25) angeordnet sind, um gegen den Sitz (20) des stromabwärts befindlichen Paneels (2) mit Bezug zur abwärtsführenden Richtung des Dachträgers gedrückt zu werden.

2. Bausatz nach Anspruch 1, **dadurch gekennzeichnet, dass** jedes Beschichtungselement (11) einen querlaufenden Bereich aufweist, umfassend mindestens einen gewölbten mittleren Abschnitt (11a), dessen Innenwölbung dem Haltestab (5) gegenüberliegend angeordnet ist; wobei dieser querlaufende Bereich zudem gewölbte Seitenabschnitte (11b) umfasst, deren Innenwölbung gegenständig zum gewölbten mittleren Abschnitt (11a) und entlang Seiten angeordnet ist, die gegenständig zum gewölbten mittleren Abschnitt (11a) angeordnet sind; wobei die gewölbten Seitenabschnitte (11b) in Kontakt mit den Abstandselementen in der verbundenen Konfiguration stehen.

3. Bausatz nach Anspruch 1, **dadurch gekennzeichnet, dass** die Verbindungsglieder (12) mindestens einen Flügel (13) umfassen, der elastisch mit dem Beschichtungselement (11) verbunden ist und einen Zahn (14) an einem freien Ende aufweist; wobei die Verbindungselemente (12) zudem ein Endstück (15) umfassen, das aus der Bodenwand (8) hervortritt und eine Unterschneidung (16) aufweist, die in der verbundenen Konfiguration mit dem Zahn (14) in Eingriff gelangen soll.

4. Bausatz nach Anspruch 1, **dadurch gekennzeichnet, dass** die erste Seite (4a) des Halterungsrahmens (4) einen rohrförmigen Hauptabschnitt (19) umfasst; wobei das Endstück (18) zu einer einteiligen Konstruktion mit dem rohrförmigen Abschnitt (19) gehört und sich von diesem wegführend erstreckt.

5. Bausatz nach Anspruch 1 oder 4, **dadurch gekennzeichnet, dass** die zweite Seite (4b) des Halterungsrahmens (4) einen rohrförmigen Hauptabschnitt (21) und die Anschlagschulter (23) umfasst, die sich im Wesentlichen querlaufend zur liegenden Ebene erstreckt.

6. Bausatz nach Anspruch 4 oder Anspruch 5, **dadurch gekennzeichnet, dass** er zudem zwei Haltelemente (27, 28) umfasst, die mit der ersten Seite des Halterungsrahmens (4) eines ersten Solarpaneels (2) in der genannten Abfolge und mit der zweiten Seite (4b) des Halterungsrahmens (4) eines letzten Solarpaneels (2) in der Abfolge verbunden werden können.

## Revendications

1. Kit pour monter un toit photovoltaïque, comprenant :
- une pluralité de panneaux solaires (2) pouvant être disposés en une ou plusieurs files ou rangées disposées le long d'une direction inclinée d'une pente de toiture, chaque panneau solaire (2) ayant un cadre de support (4) disposé en périphérie ;
- au moins deux barres de support (5), chacune se développant le long d'un axe d'extension principal et chacune comprenant une partie de fixation (5a) pouvant s'accoupler à une poutrelle le long d'une direction inclinée d'une pente de toiture et deux parties d'appui (5b) reliées à ladite partie de fixation (5a) le long des côtés opposés, chaque partie d'appui (5b) pouvant respectivement recevoir deux éléments intermédiaires, dont l'un au moins définit un côté correspondant dudit cadre de support (4) d'un panneau solaire (2) ; chaque barre de support (5) pouvant être disposée entre deux files de panneaux solaires (2) ou entre une file de panneaux solaires (2) et une volige (6),
dans lequel le kit comprend au moins deux corps de verrouillage (10) fabriqués dans un matériau plastique flexible, chacun se développant le long d'un axe d'extension principal, tous deux pouvant se raccorder à une barre de support (5) correspondante et comprenant un élément de revêtement (11) ;
dans lequel chaque barre de support (5) et chaque corps de verrouillage (10) possèdent des organes de liaison (12) du type à encliquetage pour raccorder chaque corps de verrouillage (10) à la barre de support correspondante (5) ;
dans lequel chaque élément de revêtement (11) est configuré pour être disposé en contact avec les éléments intermédiaires respectifs dans une position située à l'opposé desdites parties d'appui (5b) dans une configuration raccordée de chaque corps de verrouillage (10) avec la barre de support correspondante (5), chaque élément de revêtement (11) pouvant être disposé entre deux files de panneaux solaires (2) ou entre une file de panneaux solaires (2) et une volige (6), et étant configuré pour pousser, lesdits éléments intermédiaires, contre les parties d'appui correspondantes (5b) afin de maintenir en place lesdits panneaux solaires (2) ou ladite volige (6),
dans lequel chaque barre de support (5) comprend au moins une paroi inférieure (8) qui sera accouplée à la poutrelle et définissant au moins en partie ladite partie de fixation (5a), et deux parois latérales (9) dépassant de ladite paroi inférieure (8) ;
dans lequel chaque paroi latérale (9) de chaque barre de support (5) possède un bord libre (9a) situé à l'opposé de la paroi inférieure (8) et plié vers l'autre paroi latérale (9), les bords libres pliés (9a) étant coplanaires les uns aux autres pour définir une surface d'appui des parties d'appui (5b),
dans lequel chaque barre de support (5) possède une section transversale essentiellement creuse pour définir une canalisation d'eau (7) définie par la paroi inférieure (8) en coopération avec les parois latérales (9),
dans lequel les éléments intermédiaires restant dans la configuration de montage sur les parties d'appui (5b) des barres de support (5) se trouvent face à la canalisation (7), où l'eau qui s'infiltre est acheminée dans ladite canalisation pour être évacuée,
dans lequel les éléments intermédiaires du panneau solaire (2) possèdent de plus une languette (30) se développant de façon orthogonale par rapport au plan d'appui du panneau solaire (2) le long de l'axe d'extension principal et disposée dans la configuration de montage vers la paroi inférieure (8) des barres de support (5) pour venir en contact avec les bords libres pliés (9a) des parois latérales (9),
**caractérisé en ce que** le kit comprend de plus :
des moyens d'accouplement (17) disposés entre des panneaux solaires adjacents (2) d'une file de sorte à raccorder un panneau solaire (2) à un panneau solaire adjacent (2) dans une configuration couplée comprenant un about (18) placé le long d'au moins un premier côté (4a) dudit cadre de support (4) et se développant le long d'un plan d'appui dudit panneau solaire (2) à l'extrémité dudit panneau solaire (2), et un siège (20) disposé le long d'au moins un second côté (4b), opposé au premier côté, pour recevoir ledit about (18) d'un panneau solaire adjacent (2) en appui sur celui-ci, ledit siège (20) étant défini par un épaulement de butée (23) avec une surface d'appui (22a) du second côté (4b),
l'épaulement de butée (23) définissant une retenue pour l'about (18) du premier côté (4a) du cadre de support (4) placée en amont en se référant à la direction descendante de la pente de toiture
et dans lequel un moyen d'isolation (24) fonctionnellement disposé entre ledit about (18) d'un panneau solaire (2) et ledit siège (20) d'un panneau solaire adjacent (2) comprend un scellement (25) raccordé à l'about (18) ayant une surface active disposée de façon orthogonale par rapport au plan d'appui du panneau solaire (2) et configurée pour être en contact avec l'épaulement de butée (23) dans la configuration couplée,
dans lequel ledit moyen d'isolation (24) comprend de plus un scellement supplémentaire (26) relié à l'about (18) ayant une surface active disposée de façon parallèle par rapport au plan d'appui du panneau solaire (2) et configurée pour être en contact avec la surface de repos (22a) du second côté (4b) dans la configuration couplée et
dans lequel l'about (18) et le scellement (25) sont disposés pour être poussés contre le siège (20) du panneau situé en aval (2) en se référant à la direction descendante de la pente de toiture.

2. Kit selon la revendication 1, **caractérisé en ce que** chaque élément de revêtement (11) possède une section transversale comprenant au moins une partie intermédiaire arquée (11a) dont la concavité se trouve face à ladite barre de support (5) ; ladite section transversale comprenant de plus des parties latérales arquées (11b) dont la concavité se trouve à l'opposé de celle de ladite partie intermédiaire arquée (11a) et disposée le long des côtés situés à l'opposé de ladite partie intermédiaire arquée (11a) ; lesdites parties latérales arquées (11b) étant en contact avec lesdits éléments intermédiaires dans ladite configuration raccordée.

3. Kit selon la revendication 1, **caractérisé en ce que** lesdits organes de liaison (12) comprennent au moins une ailette (13) reliée de manière élastique au dit élément de revêtement (11) et ayant une dent (14) située à l'extrémité de cette dernière ; lesdits organes de liaison (12) comprenant de plus un about (15) dépassant de ladite paroi inférieure (8) et possédant un dégagement (16) pour accueillir ladite dent (14) dans la configuration raccordée.

4. Kit selon la revendication 1, **caractérisé en ce que** ledit premier côté (4a) dudit cadre de support (4) comprend une partie tubulaire principale (19) ; ledit about (18) formant un seul tenant avec ladite partie tubulaire (19) et se développant à partir de cette dernière.

5. Kit selon la revendication 1, **caractérisé en ce que** ledit second côté (4b) dudit cadre de support (4) comprend une partie tubulaire principale (21) et l'épaulement de butée (23) se développant essentiellement transversalement par rapport au dit plan d'appui.

6. Kit selon l'une des revendications 4 ou 5, **caractérisé en ce qu'**il comprend de plus deux éléments de retenue (27, 28) pouvant être associés au dit premier côté dudit cadre de support (4) d'un premier panneau solaire (2) dans ladite file et au dit second côté (4b) dudit cadre de support (4) d'un dernier panneau solaire (2) dans ladite file.
